# FASCICULE DE BREVET EUROPEEN

(11) **EP 1 483 995 B1**
(45) Date de publication et mention de la délivrance du brevet: **02.06.2010**
(21) Numéro de dépôt: 04356071.3
(22) Date de dépôt: 12.05.2004
(51) Int. Cl.: A47J 43/044

(54) **Appareil électroménager de préparation culinaire avec un boîtier moteur supérieur et un joint d'étanchéité**
Haushaltsgerät mit Motorgehäuse und Dichtung für kulinarische Zubereitung
Household apparatus for culinary preparation with motor housing and a sealing gasket

(30) Priorité: 06.06.2003 FR 0306865
(43) Date de publication de la demande: 08.12.2004
(73) Titulaire: SEB S.A., 69130 Ecully (FR)
(72) Inventeur: Smit, Robert, 65290 Louey (FR); Charles, Patrick, 65290 Louey (FR); Noguez, Jean Michel, 65100 Lourdes (FR)
(74) Mandataire: Kiehl, Hubert

(56) Documents cités:
- EP-A- 1 153 563
- FR-A- 2 729 588
- FR-A- 2 756 477

## Description

La présente invention se rapporte au domaine technique général des appareils électroménagers de préparation culinaire comportant un boîtier moteur agencé au dessus d'un récipient de travail. La présente invention se rapporte plus particulièrement aux appareils du type précité comportant un joint d'étanchéité entre le récipient de travail et la partie supérieure de l'appareil.

Il est connu du document WO 98/24350 un appareil du type précité comportant un récipient de travail, une coupelle équipée d'un joint d'étanchéité, et un boîtier moteur supérieur, dans lequel la coupelle est verrouillée sur le récipient de travail au moyen d'un dispositif de fixation du type à baïonnette. La coupelle comporte une pièce montée mobile coopérant avec le récipient de travail. La pièce mobile est susceptible d'actionner un interrupteur agencé dans le boîtier moteur supérieur lorsque la coupelle est en place sur le récipient de travail et que le boîtier moteur est en place sur la coupelle. Cette disposition permet d'assurer une bonne étanchéité ainsi qu'une bonne sécurité. En effet, l'appareil ne peut être mis en marche si la coupelle n'est pas en place dans le récipient de travail ou si le récipient de travail est absent. Toutefois un tel appareil présente une utilisation contraignante. En effet, il est nécessaire de verrouiller la coupelle sur le récipient de travail pour pouvoir utiliser l'appareil, et de déverrouiller la coupelle pour pouvoir accéder à la préparation réalisée. De plus la présence de la pièce mobile dans la coupelle est une gêne pour le nettoyage.

Il est connu du document WO 00/30515 un appareil du type précité comportant un récipient de travail, une coupelle équipée d'un joint d'étanchéité, et un boîtier moteur supérieur, dans lequel le boîtier moteur supérieur est verrouillé sur le récipient de travail au moyen de mâchoires. Le diamètre du récipient de travail est supérieur à la hauteur du boîtier moteur. Un dispositif de sécurité agencé dans le boîtier moteur supérieur comporte une bascule permettant de détecter la présence de la coupelle et du récipient de travail pour pouvoir utiliser l'appareil. Cette disposition permet également d'assurer une bonne étanchéité ainsi qu'une bonne sécurité, grâce à la détection directe du récipient de travail et de la coupelle. En outre, la coupelle ne comporte pas de partie mobile, ce qui facilite le nettoyage. Toutefois le mécanisme de verrouillage et le dispositif de sécurité de cet appareil sont d'une part relativement onéreux et d'autre part difficilement implantables dans un appareil présentant un diamètre de récipient plus faible.

Le document FR 2 729 588 divulgue un appareil électroménager de préparation culinaire selon le préambule de la revendication 1.

Un objet de la présente invention est de proposer un appareil électroménager de préparation culinaire comportant un boîtier moteur agencé au dessus d'un récipient de travail, qui permette d'assurer une bonne sécurité avec une construction simple.

Un autre objet de la présente invention est de proposer un appareil électroménager de préparation culinaire du type précité, qui permette d'assurer une étanchéité aux liquides entre le récipient de travail et la partie supérieure de l'appareil.

Un autre objet de la présente invention est de proposer un appareil électroménager de préparation culinaire du type précité, qui permette de faciliter le nettoyage des parties de l'appareil en contact avec les aliments.

Ces objets sont atteints avec un appareil électroménager de préparation culinaire comportant un récipient de travail avec une paroi latérale, un accessoire de travail rotatif disposé dans le récipient de travail, une partie supérieure disposée sur le récipient de travail, la partie supérieure comprenant un joint comportant une lèvre annulaire déformable, le joint portant la partie supérieure, la partie supérieure comprenant un boîtier moteur incluant des moyens d'entraînement de l'accessoire de travail rotatif, et un interrupteur associé à une pièce de commande mobile entre une position de repos dans laquelle le fonctionnement de l'appareil n'est pas autorisé et une position active dans laquelle le fonctionnement de l'appareil est autorisé, la pièce de commande occupant la position de repos lorsque la partie supérieure repose sur le récipient de travail, du fait que la partie inférieure de la lèvre annulaire déformable repose sur un décrochement de la face interne de la paroi latérale et en ce que la pièce de commande est susceptible d'être déplacée par un bord supérieur du récipient de travail vers la position active lorsqu'une pression déformant la lèvre annulaire est exercée sur le boîtier moteur. Le joint sert non seulement à réaliser une étanchéité entre le récipient de travail et la partie supérieure de l'appareil, mais il sert aussi pour la commande de l'appareil. L'appareil est particulièrement sûr grâce à la détection directe du récipient de travail. L'appareil est aussi particulièrement simple d'emploi, aucun verrouillage n'étant nécessaire. Le joint permet également de contribuer au blocage en rotation de la partie supérieure par rapport au récipient de travail. La construction d'un tel appareil est ainsi particulièrement économique. De plus, une indexation de la position de la partie supérieure par rapport au récipient n'est pas nécessaire.

Selon une disposition avantageuse, la lèvre annulaire s'étend vers l'extérieur. Cette disposition permet de limiter la largeur du décrochement annulaire.

Selon une autre disposition avantageuse, la lèvre annulaire est inclinée vers le bas lorsque la partie supérieure repose sur le récipient de travail. Cette disposition permet d'obtenir une course plus importante pour la partie supérieure, ce qui contribue à simplifier la commande de l'interrupteur.

Avantageusement alors, la lèvre annulaire est incurvée vers le haut lorsqu'une pression est exercée sur le boîtier moteur. Cette disposition permet également d'obtenir une course plus importante.

Selon une autre disposition avantageuse, la dureté du joint est comprise entre 40 et 50 shore. L'effort à exercer sur la partie supérieure pour faire fonctionner l'appareil est ainsi supérieur à la force de rappel rencontrée usuellement sur les interrupteurs.

Selon un premier mode de réalisation, le joint est solidaire d'une coupelle indépendante du boîtier moteur. Cette disposition permet de faciliter le nettoyage des parties de l'appareil en contact avec les aliments. Le cas échéant, l'appareil peut également être utilisé sans la coupelle.

Avantageusement alors, le joint comporte une partie supérieure tubulaire montée dans la coupelle. Le joint peut ainsi être simplement monté dans la coupelle, et être amovible pour le nettoyage.

Selon un deuxième mode de réalisation, le joint est monté sur la face inférieure du boîtier moteur. Cette disposition permet d'accéder directement au contenu du récipient après le retrait du boîtier moteur.

Avantageusement alors, pour faciliter le nettoyage, le joint est monté amovible par rapport au boîtier moteur.

Avantageusement alors, le joint est formé par une pièce élastomère constituant la face inférieure de la partie supérieure, la pièce élastomère étant montée sur la face inférieure du boîtier moteur. La face inférieure du boîtier moteur est protégée par la pièce élastomère qui peut être retirée pour le nettoyage.

Avantageusement encore l'accessoire de travail rotatif comporte une collerette s'étendant au dessous d'une ouverture ménagée sur la face inférieure de la partie supérieure, l'ouverture étant prévue pour le passage de l'extrémité supérieure de l'accessoire de travail rotatif. Cette disposition permet de protéger le boîtier moteur lors de la réalisation de préparations liquides.

Selon un autre aspect de l'invention, pour assurer une étanchéité aux liquides entre le récipient de travail et la partie supérieure de l'appareil et pour faciliter le nettoyage des parties de l'appareil en contact avec les aliments, l'appareil électroménager de préparation culinaire comporte un récipient de travail avec une paroi latérale, un accessoire de travail rotatif disposé dans le récipient de travail, une partie supérieure disposée sur le récipient de travail, la partie supérieure comprenant un joint comportant une lèvre annulaire déformable reposant sur un décrochement de la face interne de la paroi latérale, la partie supérieure comprenant un boîtier moteur incluant des moyens d'entraînement de l'accessoire de travail rotatif, du fait que le joint est formé par une pièce élastomère constituant la face inférieure de la partie supérieure, la pièce élastomère étant montée amovible sur la face inférieure du boîtier moteur. La pièce élastomère permet de protéger la face inférieure du boîtier moteur des projections d'aliments. L'utilisateur peut si désiré retirer la pièce élastomère du boîtier moteur pour un nettoyage.

Cette disposition peut être combinée à la disposition précédente relative au joint portant la partie supérieure, ou être utilisée de manière indépendante.

L'invention sera mieux comprise à l'étude de cinq exemples de réalisation, pris à titre nullement limitatif, illustrés dans les figures annexées, dans lesquelles :
- la figure 1 est une vue d'une section verticale d'un premier exemple de réalisation d'un appareil électroménager de préparation culinaire selon l'invention, représenté en position d'attente,
- la figure 2 est une vue de l'appareil électroménager de préparation culinaire selon l'invention de la figure 1, représenté en position de fonctionnement,
- la figure 3 est une vue agrandie d'une partie de la figure 1,
- la figure 4 est une vue agrandie d'une partie de la figure 2,
- la figure 5 est une vue d'une section verticale d'un deuxième exemple de réalisation d'un appareil électroménager de préparation culinaire selon l'invention, représenté en position d'attente, le boîtier moteur étant tourné par rapport à la position illustrée aux figures 1 et 2,
- la figure 6 est une vue d'une section verticale d'un troisième exemple de réalisation d'un appareil électroménager de préparation culinaire selon l'invention, représenté en position d'attente, le boîtier moteur étant tourné par rapport à la position illustrée aux figures 1 et 2,
- la figure 7 est une vue d'une section verticale d'un quatrième exemple de réalisation d'un appareil électroménager de préparation culinaire selon l'invention, représenté en position d'attente, le boîtier moteur occupant une position comparable à celle des figures 5 et 6,
- la figure 8 est une vue d'une section verticale d'un cinquième exemple de réalisation d'un appareil électroménager de préparation culinaire selon l'invention, représenté en position d'attente le boîtier moteur occupant une position comparable à celle des figures 5 et 6.

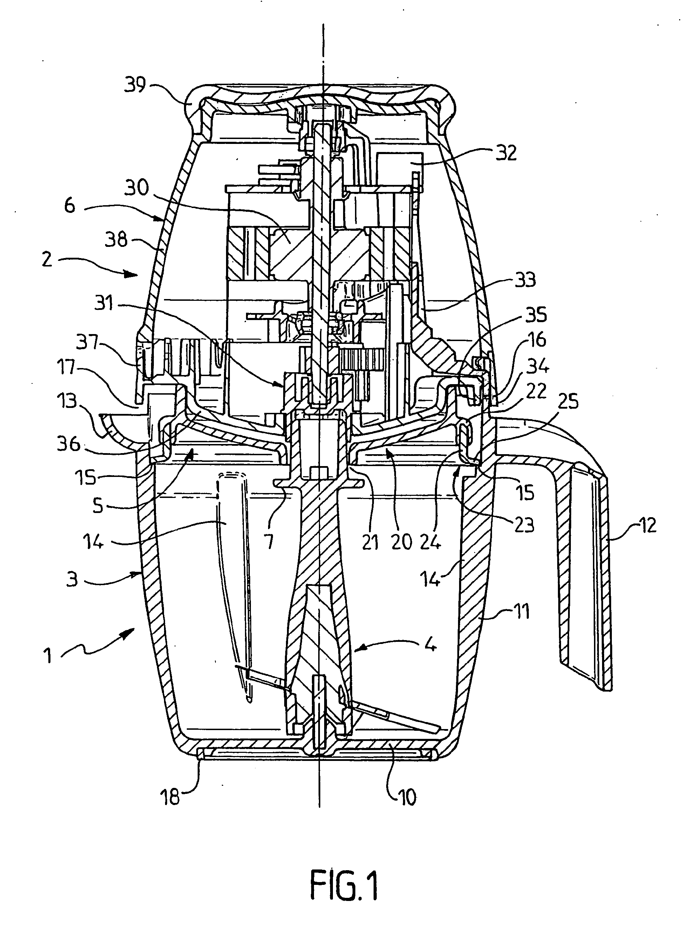

L'appareil électroménager de préparation culinaire montré à la figure 1 comporte une partie inférieure 1, comprenant un récipient de travail 3 et un accessoire de travail rotatif 4, et une partie supérieure 2, comprenant une coupelle 5 et un boîtier moteur 6.

Le récipient de travail 3 présente un fond 10 et une paroi latérale 11 munie d'une poignée 12 et d'un bec verseur 13. Des nervures 14 sont réparties sur la face intérieure de la paroi latérale 11. La face interne de la paroi latérale 11 présente un décrochement 15 au dessus des nervures 14. Le récipient de travail 3 présente un bord supérieur 16 de géométrie cylindrique, avec une échancrure 17 au dessus du bec verseur 13. Un anneau antidérapant 18 est disposé sous le fond 10.

La coupelle 5 est indépendante du boîtier moteur 6. La coupelle 5 comprend une pièce 20 présentant une ouverture 21 prévue pour le passage de l'extrémité supérieure de l'accessoire de travail rotatif 4. La pièce 20 comporte une gorge annulaire inférieure 22 prévue pour recevoir un joint 23.

Le joint 23 est solidaire de la coupelle 5. Le joint 23 comporte une partie supérieure tubulaire 24 montée dans la coupelle 5. Plus particulièrement, la partie supérieure tubulaire 24 est montée amovible dans la gorge annulaire inférieure 22 de la pièce 20. Le joint 23 comporte une lèvre annulaire 25 déformable. La lèvre annulaire 25 s'étend vers l'extérieur. La dureté du joint 23 est adaptée au poids de la partie supérieure 2 et à l'effort nécessaire pour la commande de l'appareil. La dureté shore est par exemple comprise entre 40 et 50 shore. Le joint 23 est par exemple réalisé en silicone.

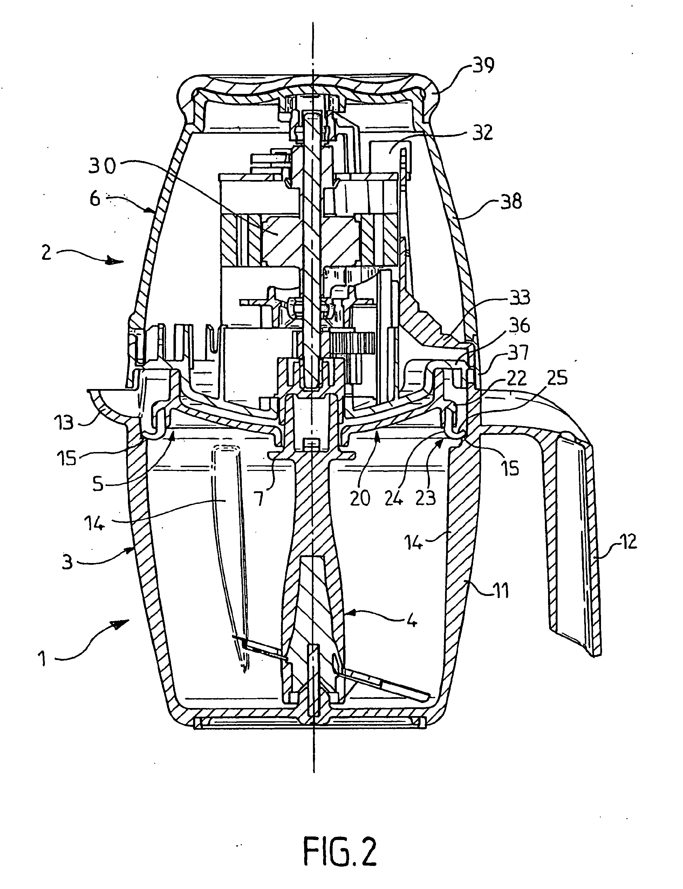

Le boîtier moteur 6 inclut un moteur 30 associé à des moyens d'entraînement 31 de l'accessoire de travail rotatif 4. Un interrupteur 32, représenté schématiquement aux figures 1 et 2, permet de contrôler le fonctionnement du moteur 30. L'interrupteur 32 est associé à une pièce de commande 33 mobile entre une position de repos dans laquelle le fonctionnement de l'appareil n'est pas autorisé et une position active dans laquelle le fonctionnement de l'appareil est autorisé. La pièce de commande 33 est par exemple une tige montée coulissante dans le boîtier moteur 6. A titre de variante, d'autres constructions sont envisageables pour la pièce de commande, notamment un levier basculant. La pièce de commande peut également appartenir à l'interrupteur 32.

La pièce de commande 33 forme une saillie par rapport à la face inférieure du boîtier moteur 6 mais est protégée latéralement d'une part par un bord périphérique 34 du boîtier moteur 6 et d'autre part par une nervure 35. La longueur de la nervure 35 est supérieure à la largeur de l'échancrure 17 du bec verseur 13. Le guidage de la pièce de commande 33 dans le boîtier moteur 6 permet ainsi un positionnement quelconque du boîtier moteur 6 sur le récipient de travail 3. L'extrémité inférieure de la pièce de commande 33 repose sur le bord supérieur 16 du récipient de travail 3 lorsque le boîtier moteur 6 est disposé sur la coupelle 5 mise en place dans le récipient de travail 3. A titre de variante, la pièce de commande 33 peut venir en contact sur le bord supérieur 16 du récipient de travail 3 seulement lorsqu'une pression est exercée sur le boîtier moteur 6.

Le boîtier moteur 6 comprend une base 36, un enjoliveur 37, un corps 38 et un cache supérieur 39. Le bord périphérique 34 appartient à l'enjoliveur 37. La nervure 35 appartient à la base 36. Le cache supérieur 39 est monté sur le corps 38. La base 36 est assemblée avec le corps 38. L'enjoliveur 37 est monté entre la base 36 et le corps 38.

L'accessoire de travail rotatif 4 disposé dans le récipient de travail 3 comporte une collerette 7 s'étendant au dessous de l'ouverture 21 ménagée sur la face inférieure de la partie supérieure 2, pour protéger l'ouverture 21 des projections d'aliments.

Le joint 23 porte la partie supérieure 2 disposée sur le récipient de travail 3.

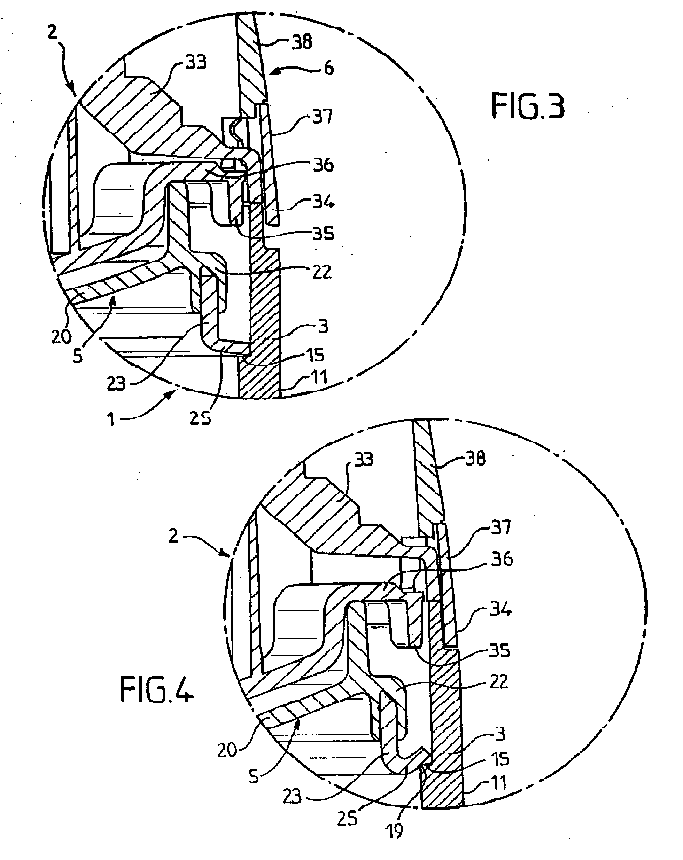

Tel que montré aux figures 1 et 3, la pièce de commande 33 occupe la position de repos lorsque la partie supérieure 2 repose sur le récipient de travail 3. La lèvre annulaire 25 est inclinée vers le bas lorsque la partie supérieure 2 repose sur le récipient de travail 3 par l'intermédiaire de la coupelle 5. Tel que mieux visible à la figure 3, la lèvre annulaire 25 déformable repose sur le décrochement 15 de la face interne de la paroi latérale 11 du récipient de travail 3 lorsque la coupelle 5 est en place sur le récipient de travail 3.

Tel que montré aux figures 2 et 4, la pièce de commande 33 est susceptible d'être déplacée par le récipient de travail 3 vers la position active lorsqu'une pression est exercée sur le boîtier moteur 6. La lèvre annulaire 25 est incurvée vers le haut lorsqu'une pression est exercée sur le boîtier moteur 6. Tel que mieux visible à la figure 4, la lèvre annulaire 25 repose sur une bordure annulaire 19 reliant le décrochement 15 à la partie inférieure de la face inférieure de la paroi latérale 11 du récipient 3. Cette disposition permet de garantir une bonne étanchéité aux liquides entre le récipient de travail 3 et la partie supérieure 2 de l'appareil. La bordure annulaire 19 peut présenter un arrondi.

Le fonctionnement de l'appareil illustré aux figures 1 à 4 est le suivant. L'utilisateur met en place l'accessoire de travail rotatif 4 dans le récipient de travail 3, dispose la coupelle 5 avec la lèvre annulaire 25 du joint 23 sur le décrochement 15 du récipient de travail 3, puis met en place le boîtier moteur 6. Grâce au joint 23 le boîtier moteur 6 n'est pas déséquilibré par la présence de la pièce de commande 33 en position de repos. Une simple pression sur le boîtier moteur 6 suffit à faire fonctionner l'appareil. La pièce de commande 33 venant au contact du bord supérieur 16 du récipient de travail 3 est repoussée dans le boîtier moteur 6 et atteint sa position active. L'utilisateur peut laver la coupelle 5 et si désiré retirer le joint 23 de la pièce 20.

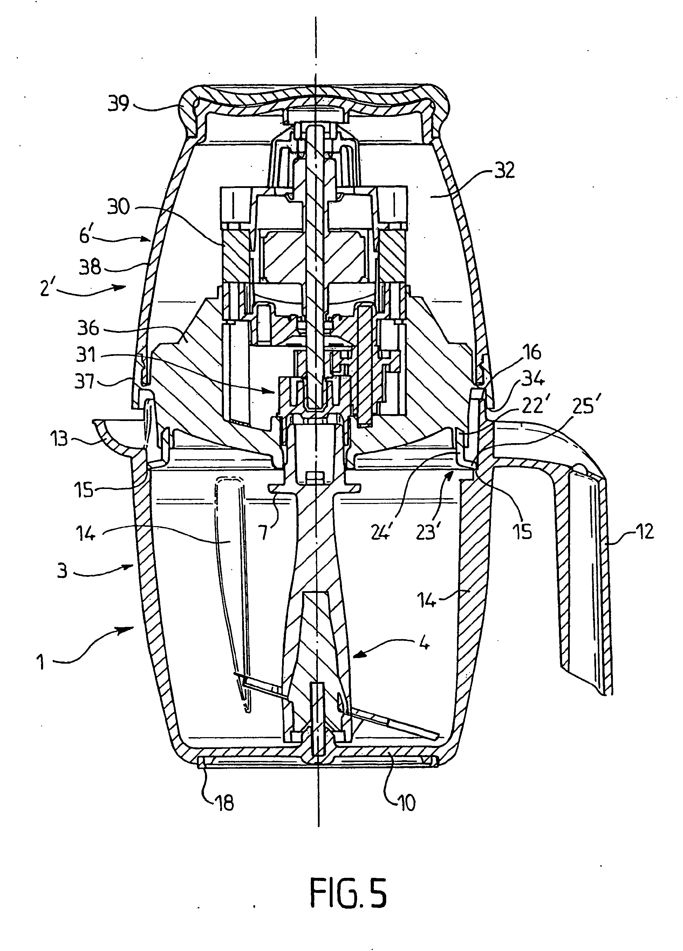

L'appareil illustré à la figure 5 diffère de l'exemple de réalisation précédent en ce que le joint 23' est monté sur la face inférieure du boîtier moteur 6'. La partie supérieure 2' ne comporte pas de coupelle. Le joint 23' est monté amovible par rapport au boîtier moteur 6'. Le joint 23' comporte une lèvre annulaire 25' déformable et une partie supérieure tubulaire 24' montée dans une gorge annulaire inférieure 22' du boîtier moteur 6'.

Le fonctionnement de l'appareil illustré à la figure 5 est le suivant. L'utilisateur met en place l'accessoire de travail rotatif 4 dans le récipient de travail 3, puis met en place le boîtier moteur 6' avec la lèvre annulaire 25' du joint 23' sur le décrochement 15 du récipient de travail 3. Une simple pression sur le boîtier moteur 6' suffit à faire fonctionner l'appareil. L'utilisateur peut si désiré retirer le joint 23' du boîtier moteur 6' pour un nettoyage.

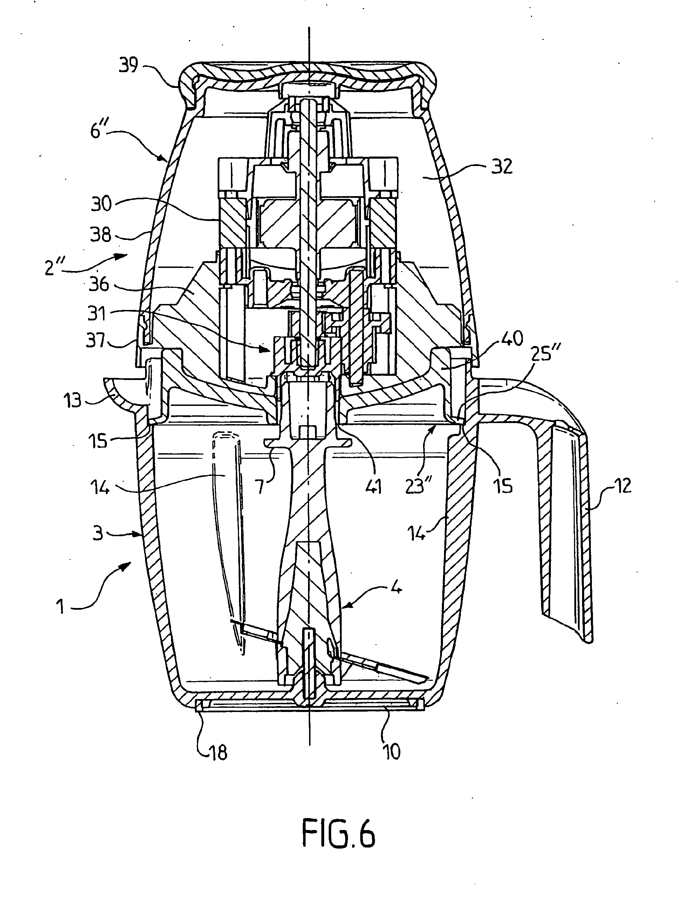

L'appareil illustré à la figure 6 diffère de l'exemple de réalisation précédent en ce que le joint 23" est formé par une pièce élastomère 40 constituant la face inférieure de la partie supérieure 2". La pièce élastomère 40 est montée sur la face inférieure du boîtier moteur 6". La pièce élastomère 40 présente une ouverture 41 prévue pour le passage de l'extrémité supérieure de l'accessoire de travail rotatif 4. La pièce élastomère 40 permet de protéger la face inférieure du boîtier moteur 6" des projections d'aliments.

Le fonctionnement de l'appareil illustré à la figure 6 est le suivant. L'utilisateur met en place l'accessoire de travail rotatif 4 dans le récipient de travail 3, puis met en place le boîtier moteur 6" portant la pièce élastomère 40. La lèvre annulaire 25" du joint 23" vient reposer sur le décrochement 15 du récipient de travail 3. Une simple pression sur le boîtier moteur 6" suffit à faire fonctionner l'appareil. L'utilisateur peut si désiré retirer la pièce élastomère 40 du boîtier moteur 6" pour un nettoyage. Ainsi le joint 23" est monté amovible par rapport au boîtier moteur 6".

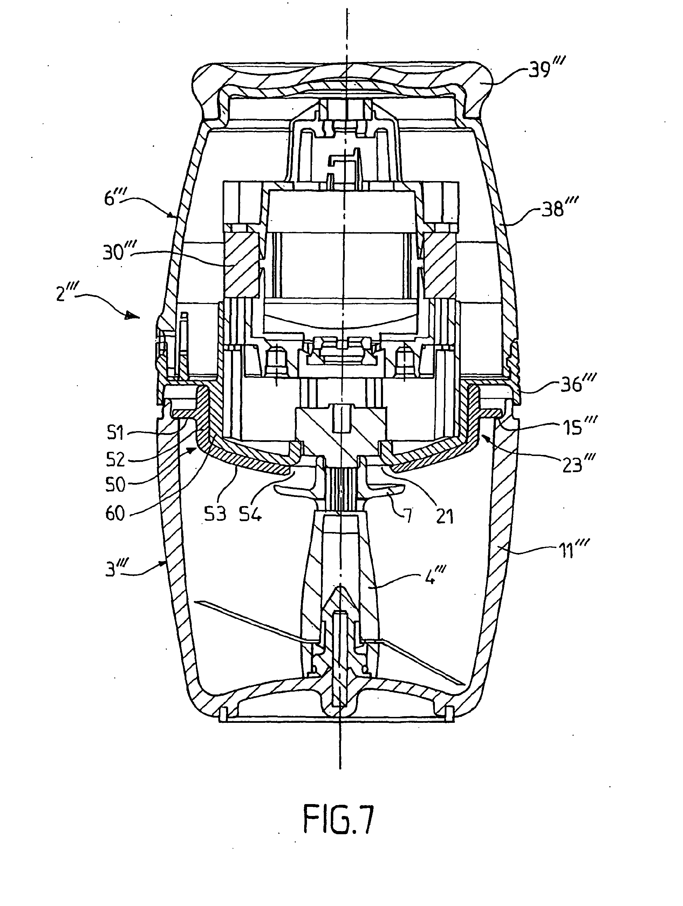

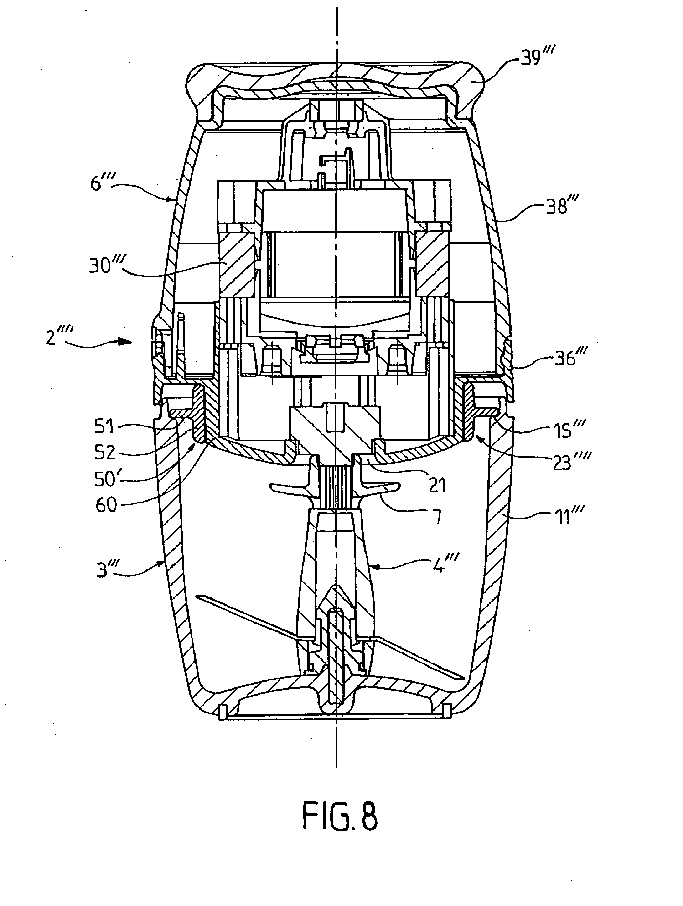

Les exemples de réalisation illustrés aux figures 7 et 8 présentent une construction voisine de celle de l'exemple de réalisation précédent, avec un récipient de travail 3"', un accessoire de travail rotatif 4"' surmonté d'un boîtier moteur 6"', avec un joint 23"' ; 23"" monté sur la face inférieure du boîtier moteur 6"'. De ce fait, la partie supérieure 2"' ; 2"" est également dépourvue de coupelle. Le boîtier moteur comporte une base 36"' montée sur un corps 38"' surmonté d'un cache 39"'. Le bord supérieur du récipient de travail 3"' est susceptible d'actionner une pièce de commande, non visible aux figures, lorsqu'une pression est exercée sur le boîtier moteur 6"' disposé sur le récipient de travail 3"', de manière à autoriser le fonctionnement de l'appareil.

Dans l'exemple de réalisation illustré à la figure 7, le joint 23"' est formé par une pièce élastomère 50 constituant la face inférieure de la partie supérieure 2"'. La pièce élastomère 50 est montée sur la face inférieure du boîtier moteur 6"'. La pièce élastomère 50 présente une lèvre annulaire 51 déformable reposant sur un décrochement 15"' de la face intérieure de la paroi latérale 11 "' du récipient de travail 3"'. La lèvre annulaire 51 est issue de la face externe d'une couronne 52 montée autour d'une protubérance inférieure 60 du boîtier moteur 6"'. La lèvre annulaire 51 est radiale en position de repos. La pièce élastomère 50 présente une paroi centrale 53 munie d'une ouverture 54 prévue pour le passage de l'extrémité supérieure de l'accessoire de travail rotatif 4"'. La paroi centrale 53 prolonge la couronne 52. La pièce élastomère 50 permet de protéger la face inférieure du boîtier moteur 6"' des projections d'aliments, grâce à la paroi centrale 53 et à la lèvre annulaire 51.

L'exemple de réalisation illustré à la figure 8 diffère de l'exemple de réalisation précédent en ce que le joint 23"" est formé par une pièce élastomère 50' dépourvue de paroi centrale.

Le fonctionnement des appareils illustrés aux figures 7 et 8 est comparable au fonctionnement de l'appareil illustré à la figure 6. Comme dans l'exemple de réalisation précédent, le joint 23"', 23"" est monté amovible et peut être retiré du boîtier moteur 6"' pour un nettoyage.

A titre de variante, le joint 23 ; 23' ; 23" ; 23"' ; 23"" peut être monté fixe dans la partie supérieure, par exemple en étant surmoulé sur la pièce 20 de la coupelle 5 ou sur la base 36 ; 36"' du boîtier moteur 6' ; 6" ; 6"'.

A titre de variante, le décrochement 15 n'est pas nécessairement annulaire, mais peut par exemple être réalisé par une succession d'ergots distants, lorsqu'une bonne étanchéité du joint 23 ; 23' ; 23" ; 23"' ; 23"" avec le récipient 4 ; 4"' n'est pas nécessaire. Si désiré, les ergots précités peuvent être réalisés par des nervures internes du récipient 4 ; 4"'.

A titre de variante, la pièce élastomère 40 ; 50 formant le joint 23" ; 23"' ne comporte pas nécessairement une lèvre annulaire 25" ; 51 prévue pour porter le boîtier moteur 6" ; 6"'.

La présente invention n'est nullement limitée aux exemples de réalisation décrits et à leurs variantes, mais englobe de nombreuses modifications dans le cadre des revendications.

## Revendications

1. Appareil électroménager de préparation culinaire comportant un récipient de travail (3 ; 3"') avec une paroi latérale (11 ; 11 "'), un accessoire de travail rotatif (4 ; 4"') disposé dans le récipient de travail (3 ; 3"'), une partie supérieure (2 ; 2' ; 2" ; 2"' ; 2"") disposée sur le récipient de travail (3 ; 3"'), la partie supérieure (2 ; 2' ; 2" ; 2"' ; 2"") comprenant un joint (23 ; 23' ; 23" ; 23"' ; 23"") comportant une lèvre annulaire (25 ; 25' ; 25" ; 51) déformable, le joint (23 ; 23' ; 23" ; 23"' ; 23"") portant la partie supérieure (2 ; 2' ; 2" ; 2"' ; 2""), la partie supérieure (2 ; 2' ; 2" ; 2"' ; 2"") comprenant un boîtier moteur (6 ; 6' ; 6" ; 6"') incluant des moyens d'entraînement (31) de l'accessoire de travail rotatif (4 ; 4"'), et un interrupteur (32) associé à une pièce de commande (33) mobile entre une position de repos dans laquelle le fonctionnement de l'appareil n'est pas autorisé et une position active dans laquelle le fonctionnement de l'appareil est autorisé, la pièce de commande (33) occupant la position de repos lorsque la partie supérieure (2 ; 2' ; 2" ; 2"' ; 2"") repose sur le récipient de travail (3 ; 3"'), **caractérisé en ce que** la partie Inférieure de la lèvre annulaire (25 ; 25' ; 25" ; 51) déformable repose sur un décrochement (15 ; 15"') de la face interne de la paroi latérale (11 ; 11"') et **en ce que** la pièce de commande (33) est susceptible d'être déplacée par un bord supérieur (16) du récipient de travail (3 ; 3"') vers la position active lorsqu'une pression déformant la lèvre annulaire (25 ; 25' ; 25" ; 51) est exercée sur le boîtier moteur (6 ; 6' ; 6" ; 6"').

2. Appareil électroménager de préparation culinaire selon la revendication 1, **caractérisé en ce que** la lèvre annulaire (25 ; 25' ; 25" ; 51) s'étend vers l'extérieur.

3. Appareil électroménager de préparation culinaire selon l'une des revendications 1 ou 2, **caractérisé en ce que** la lèvre annulaire (25 ; 25' ; 25") est inclinée vers le bas lorsque la partie supérieure (2 ; 2' ; 2") repose sur le récipient de travail (3).

4. Appareil électroménager de préparation culinaire selon la revendication 3, **caractérisé en ce que** la lèvre annulaire (25 ; 25' ; 25") est incurvée vers le haut lorsqu'une pression est exercée sur le boîtier moteur (6 ; 6' ; 6").

5. Appareil électroménager de préparation culinaire selon l'une des revendications 1 à 4, **caractérisé en ce que** la dureté du joint (23 ; 23' ; 23") est comprise entre 40 et 50 shore.

6. Appareil électroménager de préparation culinaire selon l'une des revendications 1 à 5, **caractérisé en ce que** le joint (23) est solidaire d'une coupelle (5) indépendante du boîtier moteur (6).

7. Appareil électroménager de préparation culinaire selon la revendication 6, **caractérisé en ce que** le joint (23) présente une partie supérieure tubulaire (24) montée dans la coupelle (5).

8. Appareil électroménager de préparation culinaire selon l'une des revendications 1 à 7 **caractérisé en ce que** le joint (23' ; 23" ; 23"' ; 23"") est monté sur la face inférieure du boîtier moteur (6' ; 6" ; 6"').

9. Appareil électroménager de préparation culinaire selon la revendication 8, **caractérisé en ce que** le joint (23' ; 23" ; 23"' ; 23"") est monté amovible par rapport au boîtier moteur (6' ; 6" ; 6"').

10. Appareil électroménager de préparation culinaire selon la revendication 9, **caractérisé en ce que** le joint (23" ; 23"') est formé par une pièce élastomère (40 ; 50) constituant la face inférieure de la partie supérieure (2" ; 2"'), la pièce élastomère (40 ; 50) étant montée sur la face inférieure du boîtier moteur (6" ; 6"').

11. Appareil électroménager de préparation culinaire selon l'une des revendications 1 à 10, **caractérisé en ce que** l'accessoire de travail rotatif (4 ; 4"') comporte une collerette (7) s'étendant au dessous d'une ouverture (21 ; 41 ; 54) ménagée sur la face inférieure de la partie supérieure (2 ; 2' ; 2" ; 2"'), l'ouverture (21 ; 41 ; 51) étant prévue pour le passage de l'extrémité supérieure de l'accessoire de travail rotatif (4 ; 4"').

12. Appareil électroménager de préparation culinaire selon l'une des revendications 1 à 11, **caractérisé en ce que** le décrochement (15 ; 15") est annulaire.

## Claims

1. Electrical household food preparation appliance comprising a working container (3; 3"') with a side wall (11; 11"'), a rotating working accessory (4; 4"') arranged inside the working container (3; 3"'), an upper part (2; 2'; 2"; 2"'; 2"") arranged on the working container (3; 3"'), the upper part (2; 2'; 2"; 2"'; 2"") comprising a seal (23; 23'; 23"; 23"'; 23"") with a deformable annular lip (25; 25'; 25"; 51), the seal (23; 23'; 23"; 23"'; 23"") bearing the upper part (2; 2'; 2"; 2"'; 2""), the upper part (2; 2'; 2"; 2"'; 2"") comprising a motor housing (6; 6'; 6"; 6"') including the drive means (31) of the rotating working accessory (4; 4"'), and a switch (32) associated with a control part (33) moving between a rest position in which the operation of the appliance is not permitted and an active position in which the operation of the appliance is permitted, the control part (33) occupying the rest position when the upper part (2; 2'; 2"; 2"'; 2"") is resting on the working container (3; 3"'), **characterised in that** the lower part of the deformable annular lip (25; 25'; 25"; 51) rests on a recess (15; 15"') in the internal face of the side wall (11; 11"') and **in that** the control part (33) can be moved by an upper edge (16) of the working container (3; 3"') to the active position when pressure deforming the annular lip (25; 25'; 25"; 51) is exerted on the motor housing (6; 6'; 6"; 6"').

2. Electrical household food preparation appliance according to claim 1, **characterised in that** the annular lip (25; 25'; 25"; 51) extends outward.

3. Electrical household food preparation appliance according to one of claims 1 or 2, **characterised in that** the annular lip (25; 25'; 25") is inclined downward when the upper part (2; 2'; 2") is resting on the working container (3).

4. Electrical household food preparation appliance according to claim 3, **characterised in that** the annular lip (25; 25'; 25") is curved upward when pressure is exerted on the motor housing (6; 6'; 6").

5. Electrical household food preparation appliance according to one of claims 1 to 4, **characterised in that** the hardness of the seal (23; 23'; 23") is between 40 and 50 shore.

6. Electrical household food preparation appliance according to one of claims 1 to 5, **characterised in that** the seal (23) is integral with a cup (5) independent of the motor housing (6).

7. Electrical household food preparation appliance according to claim 6, **characterised in that** the seal (23) has a tubular upper part (24) mounted inside the cup (5).

8. Electrical household food preparation appliance according to one of claims 1 to 7, **characterised in that** the seal (23; 23"; 23"'; 23"") is mounted on the lower face of the motor housing (6'; 6"; 6"').

9. Electrical household food preparation appliance according to claim 8, **characterised in that** the seal (23'; 23"; 23"'; 23"") is removably mounted in relation to the motor housing (6' 6"; 6"').

10. Electrical household food preparation appliance according to claim 9, **characterised in that** the seal (23"; 23"') is formed by an elastomer part (40; 50) forming the lower face of the upper part (2"; 2"'), the elastomer part (40; 50) being mounted on the lower face of the motor housing (6"; 6"').

11. Electrical household food preparation appliance according to one of claims 1 to 10, **characterised in that** the rotating working accessory (4; 4"') comprises a collar (7) extending beneath an opening (21; 41; 54) made on the lower face of the upper part (2; 2'; 2"; 2"'), the opening (21; 41; 51) being intended for the passage of the upper end of the rotating working accessory (4; 4"').

12. Electrical household food preparation appliance according to one of claims 1 to 11, **characterised in that** the recess (15; 15") is annular.

## Patentansprüche

1. Elektrohaushaltsgerät für kulinarische Zubereitungen, umfassend einen Arbeitsbehälter (3 ; 3"') mit einer Seitenwand (11 ; 11'"), ein drehendes Arbeitszubehör (4 ; 4"'), das im Arbeitsbehälter (3 ; 3"') angeordnet ist, einen oberen Teil (2 ; 2' ; 2" ; 2"' ; 2""), der auf dem Arbeitsbehälter (3 ; 3"') angeordnet ist, wobei der obere Teil (2 ; 2' ; 2" ; 2"' ; 2"") eine Dichtung (23 ; 23' ; 23" ; 23"' ; 23"") mit einer verformbaren Ringlippe (25 ; 25' ; 25" ; 51) umfasst, wobei die Dichtung (23 ; 23' ; 23" ; 23"' ; 23"") den oberen Teil (2 ; 2' ; 2" ; 2"' ; 2"") trägt, wobei der obere Teil (2 ; 2' ; 2" ; 2"' ; 2"") ein Motorgehäuse (6 ; 6' ; 6" ; 6"'), das Mittel (31) für den Antrieb des drehenden Arbeitszubehörs (4 ; 4"') einschließt, und einen Schalter (32) umfasst, der mit einem Steuerteil (33) verbunden ist, das zwischen einer Ruheposition, in der der Betrieb des Geräts nicht zugelassen ist, und einer aktiven Position, in der der Betrieb des Geräts zugelassen ist, beweglich ist, wobei das Steuerteil (33) die Ruheposition einnimmt, wenn sich der obere Teil (2 ; 2' ; 2" ; 2"' ; 2"") auf dem Arbeitsbehälter (3 ; 3"') befindet, **dadurch gekennzeichnet, dass** der untere Teil der verformbaren Ringlippe (25 ; 25' ; 25" ; 51) auf einem Rücksprung (15 ; 15"') der Innenseite der Seitenwand (11 ; 11"') aufliegt, und dadurch, dass das Steuerteil (33) von einem oberen Rand (16) des Arbeitsbehälters (3 ; 3"') in die aktive Position verschoben werden kann, wenn ein Druck, der die Ringlippe (25 ; 25' ; 25" ; 51) verformt, auf das Motorgehäuse (6 ; 6' ; 6" ; 6"') ausgeübt wird.

2. Elektrohaushaltsgerät für kulinarische Zubereitungen nach Anspruch 1, **dadurch gekennzeichnet, dass** sich die Ringlippe (25 ; 25' ; 25" ; 51) nach außen erstreckt.

3. Elektrohaushaltsgerät für kulinarische Zubereitungen nach einem der Ansprüche 1 oder 2, **dadurch gekennzeichnet, dass** die Ringlippe (25 ; 25' ; 25") nach unten geneigt ist, wenn sich der obere Teil (2 ; 2' ; 2") auf dem Arbeitsbehälter (3) befindet.

4. Elektrohaushaltsgerät für kulinarische Zubereitungen nach Anspruch 3, **dadurch gekennzeichnet, dass** die Ringlippe (25 ; 25' ; 25") nach oben gekrümmt ist, wenn ein Druck auf das Motorgehäuse (6 ; 6' ; 6") ausgeübt wird.

5. Elektrohaushaltsgerät für kulinarische Zubereitungen nach einem der Ansprüche 1 bis 4, **dadurch gekennzeichnet, dass** die Härte der Dichtung (23 ; 23' ; 23") zwischen 40 und 50 Shore beträgt.

6. Elektrohaushaltsgerät für kulinarische Zubereitungen nach einem der Ansprüche 1 bis 5, **dadurch gekennzeichnet, dass** die Dichtung (23) fest mit einer Schale (5) verbunden ist, die vom Motorgehäuse (6) unabhängig ist.

7. Elektrohaushaltsgerät für kulinarische Zubereitungen nach Anspruch 6, **dadurch gekennzeichnet, dass** die Dichtung (23) einen röhrenförmigen, oberen Teil (24) aufweist, der in der Schale (5) befestigt ist.

8. Elektrohaushaltsgerät für kulinarische Zubereitungen nach einem der Ansprüche 1 bis 7, **dadurch gekennzeichnet, dass** die Dichtung (23' ; 23" ; 23"' ; 23"") auf der Unterseite des Motorgehäuses (6' ; 6" ; 6"') befestigt ist.

9. Elektrohaushaltsgerät für kulinarische Zubereitungen nach Anspruch 8, **dadurch gekennzeichnet, dass** die Dichtung (23' ; 23" ; 23"' ; 23"") abnehmbar in Bezug auf das Motorgehäuse (6' ; 6" ; 6"') befestigt ist.

10. Elektrohaushaltsgerät für kulinarische Zubereitungen nach Anspruch 9, **dadurch gekennzeichnet, dass** die Dichtung (23" ; 23"') von einem Elastomerteil (40 ; 50) gebildet wird, das die Unterseite des oberen Teils (2" ; 2"') bildet, wobei das Elastomerteil (40 ; 50) auf der Unterseite des Motorgehäuses (6" ; 6"') befestigt ist.

11. Elektrohaushaltsgerät für kulinarische Zubereitungen nach einem der Ansprüche 1 bis 10, **dadurch gekennzeichnet, dass** das drehende Arbeitszubehör (4 ; 4"') einen Kragen (7) umfasst, der sich unterhalb einer Öffnung (21 ; 41 ; 54) erstreckt, die auf der Unterseite des oberen Teils (2 ; 2' ; 2" ; 2"') ausgebildet ist, wobei die Öffnung (21 ; 41 ; 51) für den Durchgang des oberen Endes des drehenden Arbeitszubehörs (4 ; 4"') vorgesehen ist.

12. Elektrohaushaltsgerät für kulinarische Zubereitungen nach einem der Ansprüche 1 bis 11, **dadurch gekennzeichnet, dass** der Rücksprung (15 ; 15") ringförmig ist.
